# EUROPEAN PATENT APPLICATION

(11) **EP 4 406 988 A1**
(43) Date of publication of application: **31.07.2024**
(21) Application number: 23305097.0
(22) Date of filing: 26.01.2023
(51) Int. Cl.: C08G 18/76, C08G 18/40, C08G 18/42, C08G 18/48, C09J 175/04, C09J 175/06, C09J 175/08, C08G 18/10

(54) **A LAMINATING ADHESIVE COMPOSITION AND METHOD OF MAKING A LAMINATE USING THE COMPOSITION THEREOF**

(71) Applicant: ARKEMA FRANCE, 92700 Colombes (FR)
(72) Inventor: JOHNSON, Randy, DUBLIN, 43017 (US); ZHU, Peiwang, DUBLIN, 43016 (US); LEE, Byoungchul, DUBLIN, 43017 (US); GHOSH, Biswajit, POWELL, 43065 (US); STEED, Jared, DUBLIN, 43017 (US)
(74) Representative: Arkema Patent

(57) **Abstract**

A laminating adhesive composition for flexible food packaging using an isocyanate terminated compound which is a reaction product of (a) at least one polymeric isocyanate compound optionally having a 4,4'- MDI monomer content of no more than 65 wt%, and (b) a first polyol selected from the group consisting of polyether polyols, polyester polyols and combinations thereof; and (ii) at least one second polyol selected from the group consisting of polyether polyol, polyester polyol and combinations thereof,. The polymeric isocyanate compound may have an NCO content from about 10 wt% to about 35wt% and a viscosity from about 50 mPa.s to about 1000 mPa.s. A method of bonding a laminate with the adhesive composition, and a method of preparing the composition thereof. Preferably the adhesive composition exhibits a PAA migration of no more than 0.6 ppb with at least 7 days of cure.

## Description

### FIELD OF THE INVENTION

The presently disclosed process(es), procedure(s), method(s), product(s), result(s), and/or concept(s) (collectively referred to hereinafter as the "present disclosure or invention") relates generally to a laminating adhesive composition for flexible food packaging, a method of bonding a laminate with the composition, a method of preparing the composition thereof.

### BACKGROUND OF THE INVENTION

The present invention relates to a laminating adhesive composition for flexible food packaging, a method of bonding a laminate with the composition, a method of preparing the adhesive composition thereof.

Polyurethane prepolymers which have terminal isocyanate groups and are prepared by staged reaction of polyisocyanates with polyols are known. With suitable curing agents generally polyfunctional alcohols they can be reacted to form higher molecular weight polymers. Polyurethane prepolymers have acquired importance in numerous fields of application, including sealants, paints, and adhesives, for instance.

In early 2000's, Bostik Inc. (fka Ashland) launched low migration solvent-free laminating adhesive product Purelam 9000 based on modified, liquid 4,4'-MDI (i.e., allophanate) for food packaging. The adhesive provides extremely good rheology combined with excellent cure and low migration.

US 9453152B2 describes an adhesive composition using modified diphenylmethane diisocyanate along with methods and articles using the adhesive compositions. The adhesive compositions are especially suited for making flexible laminates for use in food packaging.

EP 2588312A1 describes two-component solventless adhesive compositions for lamination applications and laminated structures, including flexible laminated packaging, comprising at least two substrates, including structures comprising reverse printed films and/or metallized films. The adhesive comprises a prepolymer having one or more oligomers with a relatively high molecular weight.

EP 0118065 describes a process for preparing polyurethane prepolymers having terminal isocyanate groups from monocyclic and dicyclic diisocyanates, comprising a first stage of reacting a monocyclic diisocyanate with a polyfunctional alcohol in an OH group: NCO group ratio of less than 1 and, in the prepolymer thus formed, reacting a dicyclic diisocyanate with polyfunctional alcohols in an OH group: NCO group ratio of less than 1. The OH group: NCO group ratio in the case of the first reaction is situated in particular at between 0.4 and 0.8.%

WO 98/29466 describes a process for preparing a low monomer content PU prepolymer, comprising a first reaction step of reacting a diisocyanate having NCO groups of different reactivity (asymmetric diisocyanate) with polyfunctional alcohols in an OH:NCO ratio between 4 and 0.55 and, following the consumption by reaction of virtually all of the rapid NCO groups with a fraction of the OH groups present, a second reaction step of adding a sub-stoichiometric amount, relative to remaining free OH groups, of a diisocyanate (symmetric diisocyanate) which is more reactive as compared with to the less reactive NCO groups of the isocyanate from reaction step 1.

WO 99/24486 describes a process for preparing a low-viscosity polyurethane binder which carries isocyanate groups, said process comprising at least two stages, a first stage comprising preparation of a polyurethane prepolymer from an at least difunctional isocyanate and at least one polyol component and the second stage comprising reaction of a further at least difunctional isocyanate or a further at least difunctional isocyanate and a further polyol component in the presence of the polyurethane prepolymer, the predominant proportion of the isocyanate groups that are present after the end of the first stage having a lower reactivity toward isocyanate-reactive groups, especially toward OH groups, than the isocyanate groups of the at least difunctional isocyanate added in the second stage, and the OH:NCO ratio in the second stage being 0.2 to 0.6. In the first stage the OH:NCO ratio is less than 1, in particular 0.4 to 0.7.

In addition, some of the known polyurethane prepolymers are not entirely migration-free. The concept of migration comprehends the wandering of low molecular weight compounds from the polyurethane prepolymers or the polyurethane prepolymer based systems into the ambient environment. Entities considered principal causative agents for the migration are primarily the monomeric diisocyanates. The migration of monomeric diisocyanates of this kind may result in production defects, an example being a reduced seal strength in laminates. Furthermore, migratable compounds or their breakdown products may give rise to a health hazard, with the consequence that increased storage times and more in-depth monitoring are needed until the product is free from migrant material, particularly in the case of products, which are subject to contact with comestibles. Furthermore, the known polyurethane prepolymers are often of high viscosity, and in certain circumstances this may result in processing difficulties, particularly in the context of solvent-free film lamination.

Accordingly, it would be desirable to produce a laminating adhesive composition contain very less/free from TDI and/or MDI monomers and which permit the provision of adhesives having a very low isocyanate migration for flexible food packaging, a method of bonding a laminate with the composition, and a method of preparing the composition thereof.

### BRIEF DESCRIPTION

These and other embodiments will become apparent in light of the following disclosure.

One embodiment of the present disclosure relates to a laminating adhesive composition for flexible food packaging comprising: (i) an isocyanate terminated compound which is a reaction product of (a) at least one polymeric isocyanate compound and (b) a first polyol selected from the group consisting of polyether polyols, polyester polyols and combinations thereof; and (ii) at least one second polyol selected from the group consisting of polyether polyol, polyester polyol and combinations thereof. Preferably, the adhesive composition exhibits a PAA migration of less than 0.6 ppb with at least a 7day cure.

Another embodiment includes a laminating adhesive composition for flexible food packaging comprising: (i) an isocyanate terminated compound which is a reaction product of (a) at least one polymeric isocyanate compound and optionally having a 4, 4'- MDI monomer content of no more than 65 wt%, and (b) a first polyol selected from the group consisting of polyether polyols, polyester polyols and combinations thereof; and (ii) at least one second polyol selected from the group consisting of polyether polyol, polyester polyol and combinations thereof. The polymeric isocyanate compound may have an NCO content from about 10 wt% to about 35 wt% and a viscosity from about 50 mPa.s to about 1000 mPa.s. Preferably, the adhesive composition exhibits a PAA migration of less than 0.6 ppb with at least a 7 day cure.

Another embodiment of the present disclosure relates to a laminating adhesive composition for flexible food packaging comprising: (i) an isocyanate terminated compound which is a reaction product of (a) at least one polymeric diphenylmethane diisocyanate, optionally having a 4, 4'- MDI monomer content of no more than 65 wt%, and (b) a first polyol selected from the group consisting of polyether polyol, polyester polyol and combinations thereof; and (ii) at least one second polyol selected from the group consisting of polyether polyol, polyester polyol and combinations thereof. The polymeric isocyanate compound may have an NCO content from about 16 wt% to about 35 wt% and a viscosity from about 50 mPa.s to about 200 mPa.s. In a further optional embodiment, the first polyol may be selected from a group consisting of polypropylene glycol, polyethylene glycol and combinations thereof.

A method of making a laminate that comprises a first flexible substrate and a second flexible substrate, said method comprising: applying a laminating adhesive composition to a surface of the first substrate to form an adhesive bearing surface of the first substrate, and contacting a surface of the second substrate with the adhesive bearing surface of the first substrate to form the laminate, the laminating adhesive composition for flexible food packaging comprising: (i) an isocyanate terminated compound which is a reaction product of (a) at least one polymeric isocyanate compound, optionally having a 4, 4'- MDI monomer content of no more than 65 wt%; and (b) a first polyol selected from polyether polyol, polyester polyol and combinations thereof; and (ii) at least one second polyol selected from the group consisting of polyether polyol, polyester polyol and combinations thereof. The polymeric isocyanate compound may have an NCO content from about 10 wt% to about 35 wt% and a viscosity from about 50 mPa.s to about 1000 mPa.s. In a further optional embodiment, the first polyol may be selected from the group of polypropylene glycol, polyethylene glycol and combinations thereof.

Another embodiment includes a laminating adhesive composition for flexible food packaging comprising: (i) an isocyanate terminated compound which is a reaction product of (a) at least one polymeric isocyanate compound and optionally having a 4, 4'- MDI monomer content of no more than about 65 wt%, and (b) a first polyol selected from the group consisting of polyether polyols, polyester polyols and combinations thereof, wherein the isocyanate terminated compound comprises less than about 10 wt% of 2, 4'-diphenylmethane diisocyanate monomer; and (ii) at least one second polyol selected from the group consisting of polyether polyol, polyester polyol and combinations thereof.

An additional embodiment of the present disclosure is a laminating adhesive composition for flexible food packaging comprising: (i) an isocyanate terminated compound which is a reaction product of (a) at least one polymeric isocyanate compound and (b) a first polyol selected from the group consisting of polyether polyols, polyester polyols and combinations thereof; and (ii) at least one second polyol selected from the group consisting of polyether polyol, polyester polyol and combinations thereof.

### ASPECTS

The invention may further include other aspects such as those enumerated below.

A first aspect of the disclosure may include a laminating adhesive composition for flexible food packaging comprising an isocyanate terminated compound which is a reaction product of (a) at least one polymeric isocyanate compound having a 4, 4'- MDI monomer content of no more than 65 wt%, and (b) a first polyol selected from the group of polyether polyols, polyester polyols and combinations thereof. The composition may also include at least one second polyol selected from the group of polyether polyol, polyester polyol and combinations thereof.

In a second aspect, the polymeric isocyanate compound of the laminating adhesive composition of aspect 1 has an NCO content from about 10 wt% to about 35wt% and has a viscosity from about 50 mPa.s to about 1000 mPa.s.

Further, the polymeric isocyanate compound of the laminating adhesive composition of aspect 1 or 2 may be selected from the group of polymeric diphenylmethane diisocyanates, polymeric toluene diisocyanates, polymeric tetramethylxylene diisocyanates and any combination thereof.

A fourth aspect applicable to anyone of the afore aspects 1-3 the second polyol may be selected from the group of polyester polyols, polyether polyols, polyesterether polyols, polyolefin diols, polydiene block polyols, polyoxypropylene glycol, polyoxyethylene glycol, copolymers of ethylene oxide and propylene oxide and any combination thereof.

In a fifth aspect of the disclosure, applicable to any of the above aspects 1-4, either the first and/or the second polyol comprises a polyester polyol selected from the group of polyglycol-dicarboxylates, polyglycoladipates polyethylene terephthalate polyols, polycaprolactone polyols, and any combination thereof.

Regarding the sixth aspect, applicable to any of aspects 1-5 of the disclosure the first and/or second polyol is a polyether polyol and is selected from the group of polypropylene glycol, polyethylene glycol, and combinations thereof.

Furthermore in a seventh aspect applicable to anyone of the aspects 1-6, the second polyol has an average molecular weight (Mn) of from about 200 to about 10000 g/mol.

In an eighth aspect applicable to any of the preceding aspects 1-7, the isocyanate terminated compound comprises less than 10 wt% of 2, 4'-diphenylmethane diisocyanate and less than 1 wt% of 2, 2'-diphenylmethane diisocyanate.

In a ninth aspect, the polymeric isocyanate compound of anyone of the aspects 1-8 has (i) a viscosity from about 50 mPa.s to about 200 mPa.s.; and (ii) an NCO content from about 10 *wt.* % to about 33 *wt.* %*.*

10. In another aspect, the laminating adhesive of anyone of the aspects 1-9 may be a one-component adhesive or a two-component adhesive.

11. In an additional aspect applicable to anyone of the aspects 1-10, the laminating adhesive composition is a solvent-free composition.

A 12^{th} aspect includes a laminating adhesive composition for flexible food packaging wherein the isocyanate terminated compound which is a reaction product of (a) at least one polymeric diphenylmethane diisocyanate having a 4, 4' MDI content of no more than 65 wt%, and (b) a first polyol selected from the group of polyether polyol, polyester polyol, and combinations thereof; and (ii) at least one second polyol selected from the group of polyether polyol, polyester polyol and combinations thereof.

13. A further aspect includes wherein the polymeric isocyanate compound of the laminating adhesive composition of the 12^{th} aspect has an NCO content from about 16 wt% to about 35 wt% and has a viscosity from about 50 mPa.s to about 200 mPa.s.

14. In a further aspect of anyone of the aspects 12 or 13, the 4, 4'- MDI content comprises no more than 55 wt%.

15. Additionally, an aspect of the disclosure includes the cured adhesive of anyone of the aspects 1-14 having a PAA (Primary Aromatic Amine) migration of less than 0.6 ppb when testing in accordance with FDA 177.1395.

16. An additional aspect includes a method of making a laminate that comprises a first flexible substrate and a second flexible substrate. The method comprising: applying the laminating adhesive composition of anyone of the preceding aspects 1-15 to a surface of the first substrate to form an adhesive bearing surface of the first substrate, and contacting a surface of the second substrate with the adhesive bearing surface of the first substrate to form the laminate.

17. A further aspect of the method of making a laminate applicable to anyone of the afore aspects is the laminate may comprise a flexible food packaging.

18. In an additional aspect, applicable to anyone of aspects 1-17 the laminating adhesive composition exhibits the PAA migration of less than 0.6 ppb after 7 or more days of cure.

19. Another aspect applicable to anyone of aspects 1-17 is wherein the laminate exhibits a PAA (primary aromatic amines) Food Migration Value that is less than 50% relative to that of a control within 4 days from the time of lamination.

20. A further aspect applicable to anyone of the aspects 16-19, wherein the first and the second substrates are the same or different material, each being selected from the group of polyethylene, polypropylene, polyester, nylon, surlyn, aluminum foil, cellophane, polylactic acid, metalized polyester, metalized polypropylene, aclar, paper, and combinations thereof.

Aspect 21 includes a flexible adhesive composition comprising an isocyanate terminated compound which is a reaction product of (a) at least one polymeric isocyanate compound and (b) a first polyol selected from the group of polyether polyols, polyester polyols and combinations thereof; and wherein the adhesive composition exhibits a PAA migration of less than 0.6 ppb with 7 or more days of cure.

In an additional aspect of the laminating adhesive applicable to any of the preceding aspects 1-7, the isocyanate terminated compound comprises less than about 10 wt% of 2, 4'-diphenylmethane diisocyanate monomer.

Another aspect includes the laminating adhesive of anyone of the aspects 1-14 wherein the PAA migration is determined in accordance with a test method described below.

One last aspect includes a method to determine the PAA migration in accordance with FDA 177.1395. This method is applicable to the adhesive compositions disclosed herein.

### DETAILED DESCRIPTION OF THE INVENTION

An exemplary embodiment of the invention will now be described.

Before explaining at least one embodiment of the present disclosure in detail, it is to be understood that the present disclosure is not limited in its application to the details of construction and the arrangement of the components or steps or methodologies set forth in the following description or illustrated in the drawings. The present disclosure is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the present disclosure shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which the present disclosure pertains. All patents, published patent applications, and non-patent publications referenced in any portion of this application are herein expressly incorporated by reference in their entirety to the same extent as if each individual patent or publication was specifically and individually indicated to be incorporated by reference.

All of the articles and/or methods disclosed herein can be made and executed without undue experimentation in light of the present disclosure. While the articles and methods of the present disclosure have been described in terms of preferred embodiments, it will be apparent to those of ordinary skill in the art that variations can be applied to the articles and/or methods and in the steps or in the sequence of steps of the method(s) described herein without departing from the concept, spirit and scope of the present disclosure. All such similar substitutes and modifications apparent to those skilled in the art are deemed to be within the spirit, scope and concept of the present disclosure.

As utilized in accordance with the present disclosure, the following terms, unless otherwise indicated, shall be understood to have the following meanings.

The use of the word "a" or "an" when used in conjunction with the term "comprising" can mean "one," but it is also consistent with the meaning of "one or more," "at least one," and "one or more than one." The use of the term "or" is used to mean "and/or" unless explicitly indicated to refer to alternatives only if the alternatives are mutually exclusive, although the disclosure supports a definition that refers to only alternatives and "and/or." Throughout this application, the term "about" is used to indicate that a value includes the inherent variation of error for the quantifying device, the method(s) being employed to determine the value, or the variation that exists among the study subjects.

References herein to "one embodiment," or "one aspect" or "one version" or "one objective" or "another embodiment," or "another aspect" or "another version" or "another objective" of the invention can include one or more of such embodiment, aspect, version or objective, unless the context clearly dictates otherwise.

The term "at least one" refers to one as well as any quantity more than one, including but not limited to, 1, 2, 3, 4, 5, 10, 15, 20, 30, 40, 50, 100, etc. The term "at least one" can extend up to 100 or 1000 or more depending on the term to which it is attached.

All percentages, parts, proportions, and ratios as used herein are by weight of the total composition, unless otherwise specified. All such weights as they pertain to listed ingredients are based on the active level and therefore do not include solvents or by-products that can be included in commercially available materials, unless otherwise specified.

All references to singular characteristics or limitations of the present invention shall include the corresponding plural characteristics or limitations, and *vice-versa,* unless otherwise specified or clearly implied to the contrary by the context in which the reference is made.

Numerical ranges as used herein are intended to include every number and subset of numbers contained within that range, whether specifically disclosed or not. Further, these numerical ranges should be construed as providing support for a claim directed to any number or subset of numbers in that range.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The terms "or combinations thereof' and "and/or combinations thereof' as used herein refer to all permutations and combinations of the listed items preceding the term. For example, "A, B, C, or combinations thereof' is intended to include at least one of: A, B, C, AB, AC, BC, or ABC and, if order is important in a particular context, also BA, CA, CB, CBA, BCA, ACB, BAC, or CAB. Continuing with this example, expressly included are combinations that contain repeats of one or more items or terms, such as BB, AAA, AAB, BBC, AAABCCCC, CBBAAA, CABABB, and so forth. The skilled artisan will understand that typically there is no limit on the number of items or terms in any combination, unless otherwise apparent from the context.

For purposes of the following detailed description, other than in any operating examples, or where otherwise indicated, numbers that express, for example, quantities of ingredients used in the specification and claims are to be understood as being modified in all instances by the term "about". The numerical parameters set forth in the specification and attached claims are approximations that can vary depending upon the desired properties to be obtained in carrying out the invention.

The term "or combinations thereof", "and combinations thereof", and "combinations thereof' as used herein refers to all permutations and combinations of the listed items preceding the term.

The term "about" refers to a range of values + 10% of a specified value. For example, the phrase "about 200" includes ± 10% of 200, or from 180 to 220.

The term "polymerization" or "polymerizing" refers to methods for chemically reacting monomer compounds to form polymer chains. The polymer chain can be alternating, blocked, or random. The type of polymerization method can be selected from a wide variety of methods and include the following non-limiting examples: poly condensation, step growth polymerization, and free radical polymerization.

The term "polymer" refers to any large molecule, which includes macromolecules. The term "polymer" refers to a large molecule comprising one or more types of monomer residues (repeating units) connected by covalent chemical bonds. Non-limiting examples of polymers include homopolymers, and non-homopolymers such as copolymers, terpolymers, tetrapolymers and the higher analogues.

The term "monomer" refers to a small molecule that chemically bonds during polymerization to one or more monomers of the same or different kind to form a polymer.

The term "copolymer" herein refers to a polymer prepared from more than one monomers.

Unless indicated otherwise, viscosities disclosed herein are at 25°C +5°C.

According to one of the embodiments of the present disclosure, the invention relates to a laminating adhesive composition for flexible food packaging comprising: (i) an isocyanate terminated compound which is a reaction product of (a) at least one polymeric isocyanate compound and (b) a first polyol selected from the group consisting of polyether polyols, polyester polyols and combinations thereof; and (ii) at least one second polyol selected from the group consisting of polyether polyol, polyester polyol and combinations thereof.

The polymeric isocyanate compound may have an NCO content from about 10 wt% to about 35 wt% and a viscosity from about 50 mPa.s to about 1000 mPa.s. Either alternative to the NCO content and viscosity or in conjunction with, the polymeric isocyanate compound may have a 4, 4' MDI monomer content of no more than 65 wt%.

According to another embodiment of the present disclosure, the polymeric isocyanate compound is selected from the group consisting of polymeric diphenylmethane diisocyanates, polymeric toluene diisocyanates, polymeric tetramethylxylene diisocyanates and combinations thereof. The precursor (Part i) can comprise other components typically found in the prepolymer part of two-component solventless adhesives, such as polymeric isocyanates.

Isocyanates useful in the invention include polymeric isocyanates available commercially as, for example, MONDUR MR-5, MONDUR MR Light, MONDUR 448, Mondur 489 (available from Covestro), and the like and combinations thereof.

According to another objective of the present disclosure, the polymeric isocyanate compound is present in an amount from about 20 wt% to about 90 wt% of the total weight of the precursor (Part i) of the composition.

According to another objective of the present disclosure, the polymeric isocyanate compound is present in an amount from about 20 wt% to about 30 wt%, from about 31 wt% to about 40 wt%, from about 41 wt% to about 50 wt%, from about 51 wt% to about 60 wt%, from about 61 wt% to about 70 wt%, from about 71wt% to about 80 wt%, from about 81 wt% to about 90 wt% of the total weight of the precursor (Part i) of the composition.

According to a further objective of the present disclosure, the polymeric isocyanate compound has a 4, 4' MDI content of no more than 65 wt%, preferably no more than 60 wt%, even more preferably no more than 55 wt%, and more preferably no more than 50 wt%.

A further object of the disclosure includes the isocyanate compound comprises less than 10 wt% TDI. In a particular embodiment, the compound may comprise no more than 1 wt% of TDI, preferably no more than trace amounts, more preferably less than a detectable amount of TDI, most preferably free of TDI.

The isocyanate compound may comprise less than 10 wt% of aliphatic isocyanate ("AC"). In a particular embodiment, the compound may comprise no more than 1 wt% of AC, preferably no more than trace amounts, more preferably less than a detectable amount of AC, most preferably free of AC.

Also, the isocyanate compound comprises less than 10 wt% HDI trimer. In a particular embodiment, the compound may comprise no more than 1 wt% of HDI trimer, preferably no more than trace amounts, more preferably less than a detectable amount of HDI trimer, most preferably free of HDI trimer.

According to another objective of the present disclosure, the first polyol is selected from the group of polyether polyols, polyester polyols and combinations thereof.

According to one more objective of the present disclosure, the polyether polyols include those polyether polyols having a number average molecular weight (Mn) of no less than 100 g/mole, or even from about 100 g/mole to about 10000 g/mole. Useful polyether polyols can be obtained from the polymerization of a cyclic oxide, e.g., ethylene oxide, propylene oxide, butylene oxide, and tetrahydrofuran, or by the addition of one or more such oxides to polyfunctional initiators having at least two active hydrogens including, e.g., water, polyhydric alcohols (e.g., ethylene glycol, propylene glycol, diethylene glycol, cyclohexane dimethanol, glycerol, trimethylol-propane, pentaerythritol and bisphenol A, ethylenediamine, propylenediamine, triethanolamine, and 1,2-propanedithiol. Particularly useful polyether polyols include, e.g., polyoxypropylene diols and triols, poly(oxyethylene-oxypropylene) diols and triols obtained by the simultaneous or sequential addition of ethylene oxide and propylene oxide to appropriate initiators, and polytetramethylene ether glycols obtained by the polymerization of tetrahydrofuran. Examples of preferred polyether polyols include a polyalkylene oxide, such as polypropylene oxide, poly(ethylene oxide) and ethylene oxide/propylene oxide copolymer.

In an embodiment in which the second polyol includes a polyether polyol, preferably no more than 25% of the polyether polyol has a secondary hydroxyl group, more preferably no more than 20% and even more preferably no more than 15%.

According to another objective of the present disclosure, the polyester polyol is selected from the group consisting of polyglycols dicarboxylates, polycaprolactone polyols, polycaprolactone and a combination thereof.

Useful polyester polyols are prepared from the reaction product of polycarboxylic acids, their anhydrides, their esters or their halides, and a stoichiometric excess polyhydric alcohols. Suitable polycarboxylic acids include dicarboxylic acids and tricarboxylic acids including, e.g., aromatic dicarboxylic acids, anhydrides and esters thereof (e.g. terephthalic acid, isophthalic acid, dimethyl terephthalate, diethyl terephthalate, phthalic acid, phthalic anhydride, methylhexahydrophthalic acid, methyl- hexahydrophthalic anhydride, methyl-tetrahydrophthalic acid, methyl - tetrahydrophthalic anhydride, hexahydrophthalic acid, hexahydrophthalic anhydride, and tetrahydrophthalic acid), aliphatic dicarboxylic acids and anhydrides thereof (e.g. maleic acid, maleic anhydride, succinic acid, succinic anhydride, glutaric acid, glutaric anhydride, adipic acid, hexanoic acid, pimelic acid, suberic acid, azelaic acid, sebacic acid, chlorendic acid, 1,2,4-butane-tricarboxylic acid, decanedicarboxylic acid, octadecanedicarboxylic acid, dimeric acid, dimerized fatty acids, trimeric fatty acids, and fumaric acid), and alicyclic dicarboxylic acids (e.g. 1,3-cyclohexanedicarboxylic acid, and 1,4-cyclohexanedicarboxylic acid).

Examples of suitable polyols from which polyester polyols can be derived include aliphatic polyols, e.g., ethylene glycols, propane diols (e.g., 1,2-propanediol and 1,3-propanediol), butane diols (e.g., 1,3-butanediol, 1,4-butanediol,), pentane diols (e.g., 1,5-pentanediol), 1,6-hexanediol, 1,8-octanediol, 1,10-decanediol, neopentyl glycol, diethylene glycol, triethylene glycol, tetraethylene glycol, polyethylene glycols, propylene glycol, polypropylene glycols (e.g., dipropylene glycol and tripropylene glycol), 1,4-cyclohexanedimethanol, 1,4-cyclohexanediol, dimer diols, bisphenol A, bisphenol F, hydrogenated bisphenol A, hydrogenated bisphenol F, glycerol, tetramethylene glycol, polytetramethylene glycol, 3-methyl-1,5-pentanediol, 1,9-nonanediol, 2-methyl-1,8-octanediol, trimethylolpropane, glycerin, pentaerythritol, sorbitol, glucose, and combinations thereof.

In an embodiment in which the second polyol includes a polyester polyol preferably at least 75% have a primary hydroxyl group, more preferably at least 80% and even more preferably at least 85% have the primary hydroxyl group.

According to another objective of the present disclosure, the first polyol is present in an amount from about 10 wt% to about 80 wt% of the total weight of the precursor (Part i) of the composition.

According to another objective of the present disclosure, the first polyol is present in an amount from about 10 wt % to about 15 wt %, from about 16 wt % to about 20 wt %, from about 21 wt % to about 25 wt %, from about 26 wt % to about 30 wt %, from about 31 wt % to about 35 wt %, from about 36 wt % to about 40 wt %, from about 41 wt % to about 45 wt %, from about 46 wt % to about 50 wt %, from about 51 wt % to about 55 wt %, from about 56 wt % to about 60 wt %, from about 61 wt % to about 65 wt %, from about 66 wt % to about 70 wt %, from about 71 wt % to about 75 wt %, from about 76 wt % to about 80 wt % of the total weight of the precursor (Part i) of the composition.

According to another objective of the present disclosure, the second polyol is selected from the group of polyether polyols, polyester polyols and combinations thereof.

According to another objective of the present disclosure, the second polyol can be same as first polyol or can be different from first polyol.

According to another objective of the present disclosure, the second polyol is having an average molecular weight (Mn) of from about 200 to about 10000 g/mol.

According to another objective of the present disclosure, the second polyol is having an average molecular weight (Mn) of from about 200 to about 500 g/mol, from about 501 to about 1000 g/mol, from about 1001 to about 2000 g/mol, from about 2001 to about 3000 g/mol, from about 3001 to about 4000 g/mol, from about 4001 to about 5000 g/mol, from about 5001 to about 6000 g/mol, from about 6001 to about 7000 g/mol, from about 7001 to about 8000 g/mol, from about 8001 to about 9000 g/mol, and from about 9001 to about 10000 g/mol.

Diphenylmethane diisocyanate is herein also referred to as MDI. Diphenylmethane diisocyanate (MDI) monomers can be present as a mixture of three isomers, that is, 4, 4' - diphenylmethane diisocyanate (4, 4'-MDI), 2, 4'-diphenylmethane diisocyanate (2, 4'-MDI), and 2, 2'-diphenylmethane diisocyanate (2, 2'-MDI). According to another objective of the present disclosure, wherein the isocyanate terminated compound comprises less than 10 wt% of 2, 4'-diphenylmethane diisocyanate and less than 1 wt% of 2, 2'-diphenylmethane diisocyanate.

According to alternative objective, Diphenylmethane diisocyanate (MDI) monomers can be present as a mixture of three isomers, that is, 4, 4' -diphenylmethane diisocyanate (4, 4'-MDI), 2, 4'-diphenylmethane diisocyanate (2, 4'-MDI), and 2, 2'-diphenylmethane diisocyanate (2, 2'-MDI). In one specific embodiment, of the present disclosure, wherein the isocyanate terminated compound comprises less than about 10 wt% of 2, 4'-diphenylmethane diisocyanate monomers.

In another alternative specific embodiment of the present disclosure, wherein the isocyanate terminated compound comprises less than about 10 wt% of 2, 4'-diphenylmethane diisocyanate monomers and no more than about 65 wt% of 4, 4' -diphenylmethane diisocyanate (4, 4'-MDI) monomers.

According to another objective of the present disclosure, wherein the polymeric isocyanate compound is having an NCO content from about 10 wt% to about 35 wt%, preferably at least 15 wt%.

According to another objective of the present disclosure, wherein the polymeric isocyanate compound is having an NCO content from about 10 wt% to about 15 wt%, from 16 wt% to about 20 wt%, from about 21 wt% to about 25 wt%, from about 26 wt% to about 30 wt%, from about 31 wt% to about 35 wt%.

According to another objective of the present disclosure, the laminating adhesive composition is a one-component adhesive or a two-component adhesive.

According to another objective of the present disclosure, the laminating adhesive composition is a solvent-free composition.

The laminated flexible packaging materials may be formed by conventional means understood to those skilled in the art. The laminated flexible packaging materials described herein can be produced using conventional techniques and replacing conventional laminating adhesives with the two-part solventless adhesive described herein. Generally, the process for making the laminated structures comprises the steps of providing at least two substrates, each having an upper surface and a lower surface, providing the two-component solventless adhesive described herein, applying the adhesive to a surface of at least one of the substrates and bonding the substrates together. Typical methods of applying adhesive include use of web coating methods such as roll coating, gravure, offset gravure, flexo, and the like. The adhesive may be applied and cured in-line with the printing or off-line in a separate laminating step as desired.

The laminated structures, such as the flexible laminated packaging, comprise at least two substrates, such as layers of flexible material, bonded together having at least one layer of the adhesive, a cured adhesive layer which is a cured form of the solventless two-part adhesive, between each substrate thereby forming a laminated construction.

Examples of suitable materials for a substrate include, but are not limited to: paper, aluminum foil, metalized films, coated films, printed films, co-extruded films, polyester films, polyolefin based films, white polyolefin based films, polyamide based films, copolymer films, and films containing various polymer blends. The substrates may be used in any combination thereof. Typically, the two-part solventless laminating adhesive is used in flexible laminating packaging wherein one of the substrates is a reverse printed film, laminated to one or more secondary films of any of the types described herein. Also, one or more of the films may comprise linear low density polyethylene.

In an embodiment, such as when using low surface energy substrates, such as polyolefins, the surface of the substrate to be bonded may be surface-treated to enhance adhesion. Surface treating is well known and any conventional surface treating method can be used as desired for the particular application. Examples of suitable surface treating methods include corona treatments, chemical treatments, plasma treatments and flame treatments.

In another embodiment, the laminating adhesive composition for flexible food packaging comprising: (i) an isocyanate terminated compound which is a reaction product of (a) at least one polymeric diphenylmethane diisocyanate, and (b) a first polyol selected from the group of polypropylene glycol, polyethylene glycol, and combinations thereof; and (ii) at least one second polyol selected from the group of polyether polyol, polyester polyol and combinations thereof, wherein the polymeric isocyanate compound has an NCO content from about 16 wt% to about 35 wt% and has a viscosity from about 50 mPa.s to about 200 mPa.s.

According to another embodiment, a method of making a laminate that comprises a first flexible substrate and a second flexible substrate, said method comprising: applying a laminating adhesive composition to a surface of the first substrate to form an adhesive bearing surface of the first substrate, and contacting a surface of the second substrate with the adhesive bearing surface of the first substrate to form the laminate, the laminating adhesive composition for flexible food packaging comprising: (i) an isocyanate terminated compound which is a reaction product of (a) at least one polymeric isocyanate compound; and (b) a first polyol selected from polypropylene glycol, polyethylene glycol, and combinations thereof; and (ii) at least one second polyol selected from the group of polyether polyol, polyester polyol and combinations thereof, wherein the polymeric isocyanate compound has an NCO content from about 10 wt% to about 35wt% and has a viscosity from about 50 mPa.s to about 1000 mPa.s.

The cured adhesive compositions disclosed herein have exhibited a low PAA migration. Preferably, the PAA migration is no more than about 1 ppb, preferably no more than about 0.75 ppb, most preferably no more than about 0.6 ppb. The afore results may be measured up to at least 4 days after cure even up to at least 7 days of cure. Preferably the adhesive composition exhibits a PAA migration of no more than 0.6 ppb after more than 7 days of cure, e.g., up to any of 8 days, 10 days, 15 days or even 20 days. Even more preferred the PAA migration is less than 0.6 ppb after afore mentioned cure periods. The embodiments disclosed herein have achieved migration levels of less than 0.5 ppb and less than 0.4 ppb.

A preferable test method is FDA 177.1395 (FDA test). The tested samples are extracted in a 95% ethanol solution at 100°C for 2 hrs, and then a continued extraction at 40°C for 240 hrs. While other migration test methods are available, such as a 3% acetic acid solution extraction at 70°C for 2 hrs, and then optionally followed with an additional 3% acetic acid solution extraction at 40°C for 240 hrs (Alternate Method). Applicant has learned that the FDA 177.1395 test is a more aggressive test. The test results of the FDA test are known to be 15-30 times higher than the results of the Alternate Method.

The compositions and their applications according to the present disclosure may be prepared and used according to the examples set out below. These examples are presented herein for purposes of illustration of the present disclosure and are not intended to be limiting, for example, the preparations of the compositions and their applications.

### EXAMPLES

Experimental precursors were prepared in accordance with the disclosure by combining ingredients set forth in Table 1. Prepolymers using allophanate modified MDI (Mondur MA2300 from Covestro), polymeric MDI with enhanced 2, 4'-MDI (Mondur MRS from Covestro), and monomeric MDI (Mondur MLQ from Covestro) were made for comparative purpose to precursors from polymeric MDI with enhanced 4, 4'-MDI (Mondur MRS from Covestro). All experimental precursors were mixed with Purelam B9240 curative, which is available from Bostik Inc. The mix ratio for all formulations were calculated so as to provide the same isocyanate index.

**Table 1**

| **Components** | Experimental Precursors | | | Comparative Prepolymers | | | | | | |
|---|---|---|---|---|---|---|---|---|---|---|
| | A | B | C | D | E | F | G | H | I | J |
| Mondur MR5 | 30.68 | 33.66 | 36.03 | | | | | | | |
| Mondur MA2300 | | | | 40.56 | 44.51 | 47.66 | | | | |
| Mondur MRS | | | | | | | 31.29 | 34.31 | 36.72 | |
| Mondur MLQ | | | | | | | | | | 32.13 |
| | | | | | | | | | | |
| PPG 2000 | 29.95 | 20.89 | 13.46 | 20.7 | 10.04 | 1.83 | 29.34 | 20.24 | 12.77 | 22.42 |
| | | | | | | | | | | |
| Component NCO% | 14.00 | 18.00 | 22.00 | 14.00 | 18.00 | 22.00 | 14.00 | 18.00 | 22.00 | 18.00 |
| | | | | | | | | | | |

| **Curatives** | | | | | | | | | | |
|---|---|---|---|---|---|---|---|---|---|---|
| Purelam B9240 | 39.37 | 45.45 | 50.51 | 39.37 | 45.45 | 50.51 | 39.37 | 45.45 | 50.51 | 45.45 |
| | | | | | | | | | | |
| Total | 100 | 100 | 100 | 100 | 100 | 100 | 100 | 100 | 100 | 100 |

The adhesive formulations were each applied in making 48ga PET film to 1.5mil LLDPE film laminate structures. These laminated films were cured at ambient temperature for 4 days and 7 days. After curing, all laminate structures were extracted with 95% ethanol/5% (volume/volume) water mixture for MDI migration. The migration cells were conditioned at 100°C for 2 hours followed by at 40°C for 10 days. The migrated MDI is reacted with ethanol and converted to MDI derivatives, which are measured by LC-MS ("Test Method"). Total primary aromatic amine (PAA) concentration was calculated and is reported in Table 2 below.

**Table 2: Total PAA migration in parts per billion (ppb) of various adhesive formulations**

| | **Isocyanates** | **4 days cure** | | | | **7 days cure** | | | |
|---|---|---|---|---|---|---|---|---|---|
| | | **Run 1** | **Run 2** | **Run 3** | **Average** | **Run 1** | **Run 2** | **Run 3** | **Average** |
| Experimental Precursor A/B9240 | Mondur MRS | 1.28 | 1.28 | 1.33 | 1.30 | 0.41 | 0.46 | 0.46 | 0.44 |
| Experimental Precursor BB9240 | Mondur MRS | 1.10 | 1.10 | 0.75 | 0.99 | 0.52 | 0.46 | 0.35 | 0.44 |
| Experimental Precursor C/B9240 | Mondur MRS | 0.70 | 0.87 | 0.58 | 0.72 | 0.46 | 0.46 | 0.46 | 0.46 |
| Comparative Prepolymer DB9240 | Mondur MA2300 | 1.16 | 1.51 | 0.99 | 1.22 | 0.35 | 0.41 | 0.41 | 0.39 |
| Comparative Prepolymer EB9240 | Mondur MA2300 | 2.55 | 2.38 | 1.91 | 2.28 | 0.52 | 0.46 | 0.46 | 0.48 |
| Comparative Prepolymer FB9240 | Mondur MA2300 | 2.67 | 2.55 | 2.55 | 2.59 | 0.52 | 0.46 | 0.52 | 0.50 |
| Comparative Prepolymer GB9240 | Mondur MRS | 15.54 | 15.66 | 16.36 | 15.85 | 1.39 | 1.04 | 1.57 | 1.33 |
| Comparative Prepolymer HB9240 | Mondur MRS | - | - | - | - | 1.16 | 0.64 | 0.64 | 0.81 |
| Comparative Prepolymer I/B9240 | Mondur MRS | 8.35 | 9.22 | 9.74 | 9.11 | 0.64 | 0.75 | 0.81 | 0.73 |
| Comparative Prepolymer JB9240 | Mondur MLQ | 10.15 | 8.12 | 8.41 | 8.89 | 1.10 | 1.16 | 0.93 | 1.06 |

The data in Table 2 demonstrate that the laminate structures made with the Comparative Prepolymers from allophanate modified MDI (Mondur MA2300) and Experimental Precursor from polymeric MDI with enhanced 4, 4'-MDI (Mondur MR5) combined with curative Purelam B9240 provided excellent migration performance compared to the comparative laminate structures made with Comparative Prepolymers from polymeric MDI with enhanced 2, 4'-MDI (Mondur MRS) and monomeric MDI (Mondur MLQ) combined with Purelam B9240. All the adhesives made with the Experimental Precursors from polymeric MDI with enhanced 4, 4'-MDI (Mondur MR5) and Purelam B9240 showed <0.6 ppb of total PAA with 7 days cure at ambient temperature. The migration performance of Experimental Precursors from polymeric MDI with enhanced 4, 4'-MDI (Mondur MR5) is comparable to Comparative Prepolymers from allophanate modified MDI (Mondur MA2300) which is known for better migration performance, while the comparative adhesives made with the Comparative Prepolymers from polymeric MDI with enhanced 2, 4'-MDI and monomeric MDI (Mondur MLQ) combined with B9240 showed >0.6 ppb with 7 days cure at ambient temperature.

While this invention has been described in detail with reference to certain preferred embodiments, it should be appreciated that the present disclosure is not limited to those precise embodiments. Rather, in view of the present disclosure, many modifications and variations would present themselves to those skilled in the art without departing from the scope and spirit of this invention.

## Claims

1. A laminating adhesive composition for flexible food packaging comprising:
(i) an isocyanate terminated compound which is a reaction product of (a) at least one polymeric isocyanate compound and (b) a first polyol selected from the group of polyether polyols, polyester polyols and combinations thereof; and
(ii) at least one second polyol selected from the group of polyether polyol, polyester polyol and combinations thereof,
wherein the adhesive exhibits a PAA migration of less than 0.6 ppb with at least a 7 day cure.

2. The laminating adhesive composition of claim 1, wherein the polymeric isocyanate compound has an NCO content from about 10 wt% to about 35wt% and has a viscosity from about 50 mPa.s to about 1000 mPa.s.

3. The laminating adhesive composition of claims 1 or 2, wherein the polymeric isocyanate compound is selected from the group of polymeric diphenylmethane diisocyanates, polymeric toluene diisocyanates, polymeric tetramethylxylene diisocyanates and combinations thereof.

4. The laminating adhesive composition of anyone of the claims 1-3 wherein the second polyol is selected from the group of polyester polyols, polyether polyols, polyesterether polyols, polyolefin diols, polydiene block polyols, polyoxypropylene glycol, polyoxyethylene glycol, copolymers of ethylene oxide and propylene oxide and combinations thereof.

5. The laminating adhesive composition of anyone of the claims 1-4 wherein the polyester polyol is selected from the group of polyglycol-dicarboxylates, polyglycoladipates polyethylene terephthalate polyols, polycaprolactone polyols, and a combination thereof.

6. The laminating adhesive composition of one of claims 1-4, wherein the polyether polyol is selected from the group of polypropylene glycol, polyethylene glycol, and combinations thereof.

7. The laminating adhesive composition of anyone of the claims 1-6 wherein the second polyol has an average molecular weight (Mn) of from about 200 to about 10000 g/mol.

8. The laminating adhesive composition of anyone of the claims 1-7 wherein the isocyanate terminated compound comprises less than 10 wt% of 2, 4'-diphenylmethane diisocyanate and less than 1 wt% of 2, 2'-diphenylmethane diisocyanate.

9. The laminating adhesive composition of anyone of the claims 1-8 wherein the polymeric isocyanate compound is having
(i) a viscosity from about 50 mPa.s to about 200 mPa.s.; and
(ii) an NCO content from about 10 *wt.* % to about 33 *wt.*%.

10. The laminating adhesive composition of anyone of the claims 1-9 wherein the adhesive is a one-component adhesive or a two-component adhesive.

11. The laminating adhesive composition of anyone of the claims 1-10 wherein the adhesive comprises a solvent-free composition.

12. The laminating adhesive composition of anyone of the claims 1-11 wherein a 4 4' MDI monomer content of the polymeric isocyanate compound comprises no more than 65 wt%.

13. The laminating adhesive composition of claim 12 wherein the 4 4' MDI monomer content comprises no more than 55 wt%.

14. The laminating adhesive composition of anyone of the claims 1-7 wherein the isocyanate terminated compound comprises less than about 10 wt% of 2, 4'-diphenylmethane diisocyanate.

15. The laminating adhesive composition of anyone of the claims 1-14 wherein the cure comprises 7 days.
